# EUROPEAN PATENT APPLICATION

(11) **EP 3 871 875 A1**
(43) Date of publication of application: **01.09.2021**
(21) Application number: 21158759.7
(22) Date of filing: 23.02.2021
(51) Int. Cl.: B32B 3/12, B32B 3/30, B32B 5/18, B32B 15/085, B32B 15/20, B32B 27/06, B32B 27/10, B32B 27/32, B32B 27/36, B32B 29/08

(54) **STRUCTURE MADE OF MULTILAYER MATERIAL FOR OBTAINING LIGHTENED STRUCTURAL ARTICLES, CORRESPONDING MANUFACTURING METHOD AND LIGHTENED STRUCTURAL ARTICLE THUS OBTAINABLE**

(30) Priority: 26.02.2020 IT 202000003931
(71) Applicant: GIEMME S.R.L., 41011 Campogalliano (MO) (IT)
(72) Inventor: CORRADINI, Marco, 41011 Campogalliano MO (IT)
(74) Representative: Modiano, Micaela Nadia

(57) **Abstract**

A structure (1) made of multilayer material for obtaining lightened structural articles, which comprises at least one lightening layer (2) provided with a pair of mutually opposite main faces (3, 4) and at least one stiffening layer (5) associated with at least one of said main faces (3, 4);
the at least one stiffening layer (5) comprises a composite material which comprises a thermoplastic polymeric matrix (6) in which reinforcement fibers (7) are dispersed.

## Description

The present invention relates to a structure made of multilayer material for obtaining lightened structural articles, the corresponding manufacturing method and a lightened structural article thus obtainable.

With particular, but not exclusive, reference to the motor vehicle sector, it is known that a continuous search for innovative materials is ongoing, materials that offer mechanical strength characteristics comparable to those of the materials traditionally used for making structural parts, of the type of sheet metal and the like, but with much lower density, so as to reduce the overall weight of the vehicles in which they are incorporated, the required energy consumption, and the consequent emissions.

For example US patent application no. US 2017/0095997 A1 discloses a structure made of multilayer material, called a "sandwich", which is composed of an intermediate layer obtained with a material of reduced density and good mechanical strength characteristics, in particular resistance to compression applied perpendicularly to the extension of the article, and of a first and a second layer of composite material which are paired with the mutually opposite faces of the intermediate layer.

The intermediate layer can be constituted, for example, by material with a locular structure, which defines tubular cells that are polygonal or circular in transverse cross-section, made of plastic material, paper or cardboard.

The first and the second layer are, on the other hand, constituted by respective sheets of fibers, for example carbon fibers, each one of which has one side coated by a mixture of polymeric resins, of which at least one resin is thermosetting, in order to make it adhere to a corresponding face of the intermediate layer.

For example the mixture of resins can entail the use of polyurethane and epoxy resins.

The corresponding manufacturing method comprises a preparation step of the mixture of polymeric resins, a step of heating the mixture obtained to an application temperature, a step of distribution, via spraying or the like, of the heated mixture on the sheets of fibers, a step of superimposed positioning of the first layer, of the intermediate layer and of the second layer, the sheets of fibers being arranged with the respective sides coated by the mixture of resins in contact with the mutually opposite faces of the intermediate layer, and a step of setting the mixture of resins so as to obtain the adhesion of the intermediate layer with the first and the second layer in order to define a multilayer article.

The step of setting can take place inside a mold for shaping the article obtained, or in an oven.

This conventional solution is not devoid of drawbacks, among which is the fact that the corresponding processing cycle necessitates the execution of multiple steps that complicate and lengthen the execution thereof, resulting in an increase in the production costs of the articles obtained.

In particular the use of thermosetting resins entails softening times for the application thereof and hardening times for the solidification of the article, which negatively influence the duration and costs of the process, since the resin has to be kept heated during the execution of these steps.

The aim of the present invention is to eliminate the above mentioned drawbacks of the background art by providing a structure made of multilayer material for obtaining lightened structural articles, the corresponding manufacturing method and a lightened structural article thus obtainable, which makes it possible to simplify the implementation thereof, while reducing the execution times and costs thereof.

Within this aim, an object of the present invention is to involve the use of prefabricated materials, available on the market and ready for use, thus making the implementation thereof even more advantageous.

Another object of the present invention is to provide a simple structure that is easy and practical to implement, safe in use and effective in operation, and of low cost.

This aim and these objects are all achieved by the present structure made of multilayer material for obtaining lightened structural articles according to claim 1 and optionally provided with one or more of the characteristics recited in the dependent claims.

This aim and these objects are achieved by a corresponding manufacturing method and by a lightened structural article thus obtainable.

Further characteristics and advantages of the present invention will become better apparent from the detailed description of some preferred, but not exclusive, embodiments of a structure made of multilayer material for obtaining lightened structural articles, of the corresponding manufacturing method and of a lightened structural article thus obtainable, which are illustrated for the purposes of non-limiting example in the accompanying drawings wherein:
Figure 1 is an exploded perspective view of a first embodiment of a structure made of multilayer material for obtaining lightened structural articles, according to the invention;
Figure 2 is a cross-sectional view relating to the preparation step of the structure of Figure 1;
Figure 3 is a cross-sectional view relating to the step of forming and cooling the structure of Figure 1 in order to obtain a first embodiment of a lightened structural article, according to the invention;
Figures 4, 5 and 6 are views corresponding to Figures 1, 2 and 3 relating to a variation of the first embodiment of the invention;
Figures 7, 8 and 9 are views corresponding to Figures 1, 2 and 3 relating to an additional variation of the first embodiment of the invention;
Figure 10 is an exploded perspective view of a second embodiment of a structure made of multilayer material according to the invention;
Figure 11 is a cross-sectional view of a lightened structural article obtainable starting from the structure made of multilayer material of Figure 10;
Figure 12 is a cross-sectional view of a variation of the article of Figure 11;
Figure 13 is an exploded perspective view of a third embodiment of a structure made of multilayer material according to the invention;
Figure 14 is a cross-sectional view of a lightened structural article obtainable starting from the structure made of multilayer material of Figure 13;
Figure 15 is an exploded perspective view of a fourth embodiment of a structure made of multilayer material according to the invention;
Figure 16 is a cross-sectional view of a lightened structural article obtainable starting from the structure made of multilayer material of Figure 15;
Figure 17 is an exploded perspective view of a fifth embodiment of a structure made of multilayer material according to the invention;
Figure 18 is a cross-sectional view of a lightened structural article obtainable starting from the structure made of multilayer material of Figure 17;
Figure 19 is an exploded perspective view of a sixth embodiment of a structure made of multilayer material according to the invention;
Figure 20 is a cross-sectional view of a lightened structural article obtainable starting from the structure made of multilayer material of Figure 19.

With particular reference to the figures, the reference numeral 1 generally designates a structure made of multilayer material for obtaining lightened structural articles.

The structure 1 comprises at least one lightening layer 2 provided with a pair of mutually opposite main faces 3 and 4 and at least one stiffening layer 5 associated with at least one of such main faces 3 and/or 4.

The lightening layer 2 has a sheet-like shape structure, having two dimensions (width and length) much larger than the third (thickness), such that the term "main faces" means the faces that have a greater surface area than the others.

The stiffening layer 5 comprises a composite material which comprises a thermoplastic polymeric matrix 6 in which reinforcement fibers 7 are dispersed.

The thermoplastic polymeric matrix 6 comprises, preferably, polypropylene (PP), compounds thereof or derivatives thereof.

The reinforcement fibers 7, for example, can be of the type of glass fibers, carbon fibers, aramid fibers, plant fibers, polyimide (PI) fibers.

The composite material that constitutes the stiffening layer 5 can be of the unidirectional type (i.e. with the reinforcement fibers 7 oriented along a main direction), bidirectional (i.e. with the reinforcement fibers 7 oriented along two main directions which are generally mutually perpendicular) or multidirectional (i.e. with the reinforcement fibers 7 oriented in a random manner).

The fact that the composite material that constitutes the stiffening layer 5 has a thermoplastic polymeric matrix 6 makes it possible to obtain a stable adhesion of the materials that constitute the structure 1 by way of heating and compression of the structure 1 as will be explained in more detail below.

Furthermore the use of panels of composite material that are ready for use as stiffening layers 5 simplifies and accelerates the preparation of the structure 1.

The lightening layer 2 can comprise a panel with locular or cell structure 8 in which tubular cells 9 extend transversely with respect to the extension of the panel itself and have a transverse cross-section that is polygonal or circular.

The shape structure of the panel with locular structure 8 is generally flat, sheet-like and quadrangular in plan view.

The panel with locular structure 8 can be constituted by thermoplastic polymeric material (for example polypropylene (PS) or polycarbonate (PC)), paper, cardboard or aluminum.

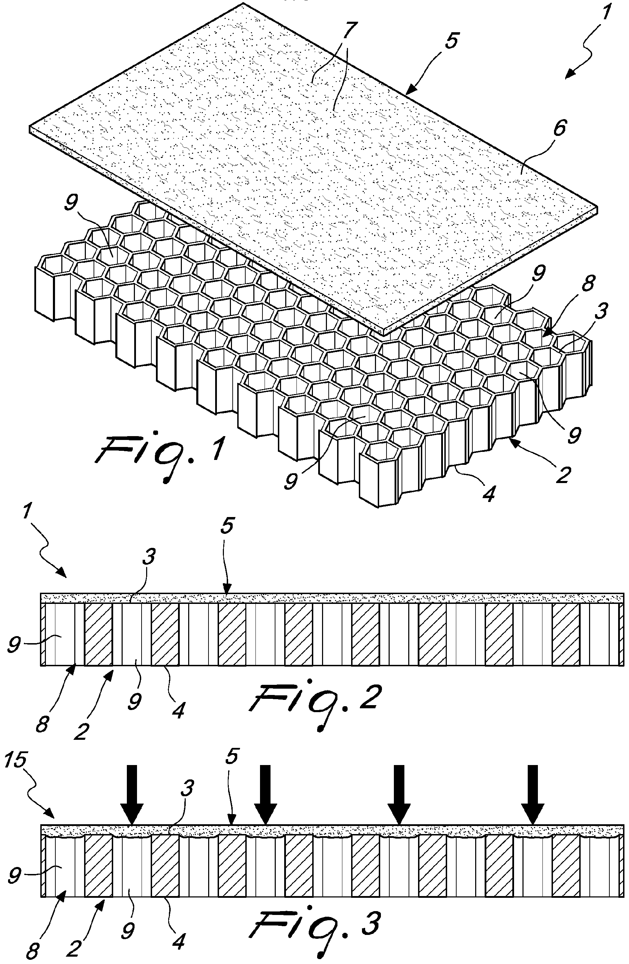

If the tubular cells 9 in the panel with locular structure 8 are polygonal in transverse cross-section then the panel of the type of "honeycomb" panels (as shown in Figures 1-3 and 10-20).

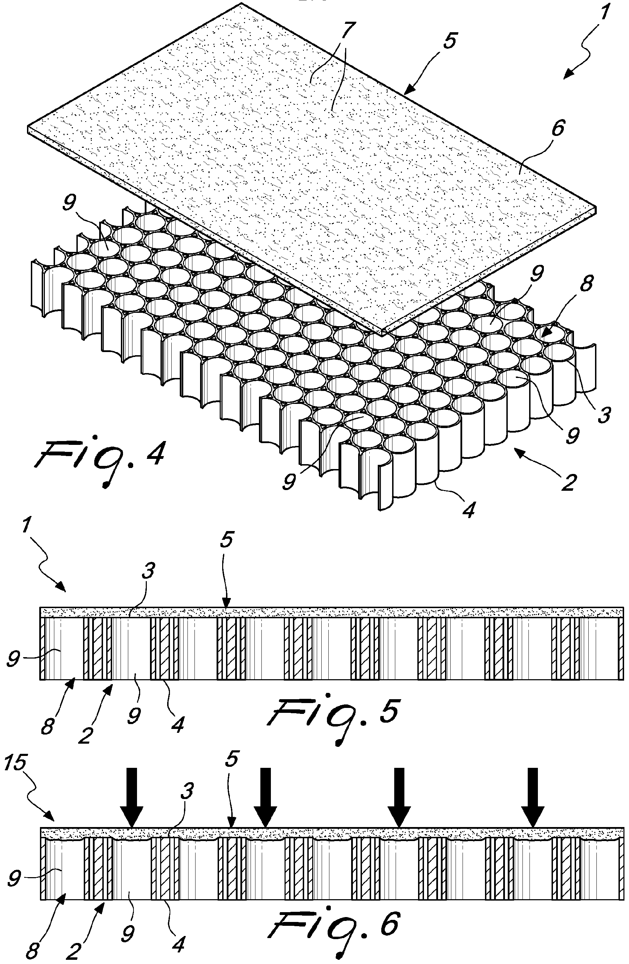

If the tubular cells 9 in the panel with locular structure 8 are circular in transverse cross-section then the panel of the type of "circular cell" panels (as shown in Figures 4-6).

The structure 1 can have thermally insulating material 12 accommodated inside the tubular cells 9 in order to confer thermal insulation properties on the obtainable article. Preferably such insulating material 12 can be in the form of powder or fibers of various dimensions. The thermally insulating material 12 can be, for example, silicon dioxide, such as Aerogel or other nanotechnological and/or nanoporous materials. The thermally insulating material 12 used preferably has a thermal conductivity comprised between 0.018 W/(m·K) and 0.021 W/(m·K) so as to confer particularly high thermal insulation performance levels on the obtainable article.

The panel with locular structure 8 can have one or more of the main faces covered with a veil, called "scrim", made of non-woven fabric (NWF), polyethylene terephthalate (PET), aluminum or other covering material.

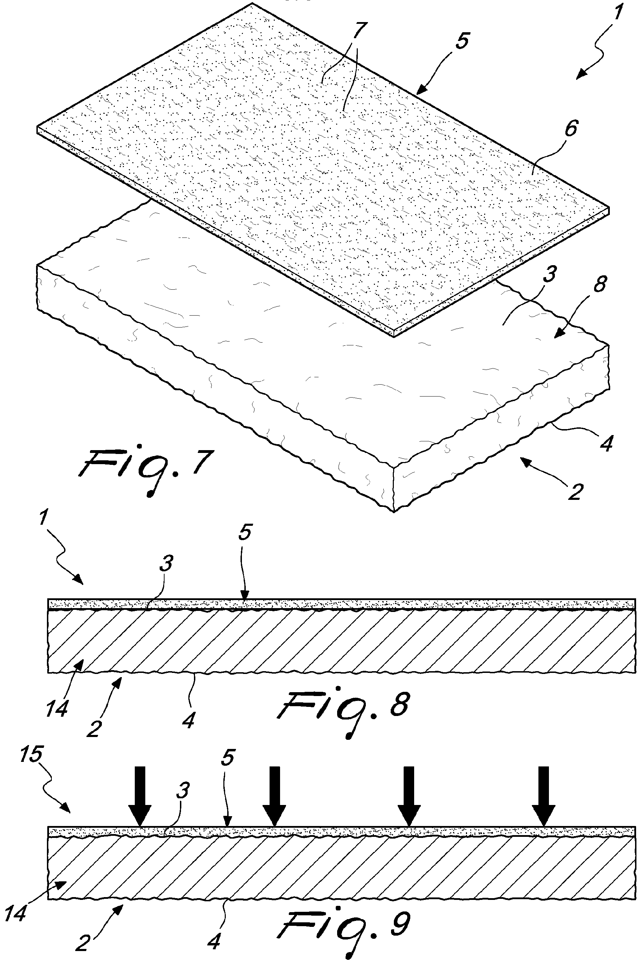

Alternatively the lightening layer 2 can be constituted by a porous panel 14 obtained from solidified foam based on thermoplastic polymers, for example, of the type of polyvinyl chloride (PVC), polyethylene terephthalate (PET), expanded polyurethane (PIR), as shown in Figures 7-9.

The lightening layer 2 can be worked in order to define, on at least one of the main faces 3 or 4, grooves 13 for accommodating tubes, cables or the like.

The structure 1 can have multiple lightening layers 2 in pairs alternating with at least one intermediate stiffening layer 5', which ensures the complete adhesion thereof.

The structure 1 can have at least one covering layer 10 associated with the at least one stiffening layer 5 on the opposite side from the at least one lightening layer 2. The function of the covering layer 10 is substantially to act as an aesthetic finish and it can be provided with various different materials. The covering layer 10 is intended to remain in view in the structure 1.

Furthermore, the structure 1 can have at least one functional layer 11.

The functional layer 11 can be interposed between two stiffening layers 5 of which one is associated with one of the main faces 3 or 4 of the lightening layer 2 or can be interposed between two intermediate stiffening layers 5', which in turn are interposed between two lightening layers 2.

Alternatively, the functional layer 11 can be associated with the at least one stiffening layer 5 on the opposite side from the at least one lightening layer 2 and remain in view on the outside of the structure 1.

In a variation there can be a covering layer 10 overlaid on the functional layer 11 via the interposition of an additional stiffening layer 5.

The functional layer 11 can be constituted by a panel made with a sound-absorbing, fire-resistant and/or thermally-insulating material of known type in order to confer such properties on the structure 1 and on the obtainable article.

The functional layer 11 can comprise, for example, phase change materials (PCM), in order to confer particular thermal insulation characteristics on the structure.

The method for manufacturing a lightened structural article 15 comprises the following steps:
- preparation of a structure 1 as described above, via the superimposed positioning of the various prefabricated ready-for-use layers;
- heating the structure 1 until the softening temperature of the thermoplastic polymeric matrix 6 is reached;
- forming and cooling the structure 1 so as to obtain a stratified article 15.

The presence of one or more stiffening layers 5, following the softening of the associated thermoplastic polymeric matrix 6, enables a perfect and long-lasting adhesion of the various layers that make up the article 15.

The step of heating can consist, for example, of maintaining the structure 1 at a variable temperature from 100°C to 220°C with a total cycle time that can vary from 50 sec to 150 sec according to the overall thickness thereof.

The forming and cooling step entails the compression of the heated structure 1 so as to obtain a partial penetration of the stiffening layer 5 with the associated thermoplastic polymeric matrix 6 softened in the lightening layer 2.

By virtue of the softening of the thermoplastic polymeric matrix 6, in fact, the stiffening layer 5 deforms, penetrating into the mouth of the tubular cells 9 of the panel with locular structure 8 or assuming a shape structure that matches the rough surface of the porous panel 14.

The forming and the cooling can take place via molding inside a mold, optionally water-cooled, in order to obtain articles 15 with particular three-dimensional shapes, or via rolling in order to obtain flat articles 15.

The articles 15 according to the invention can have various intended uses, in particular as structural panels for vehicles (loading platforms, driver's cab floors, walls for refrigeration chambers, etc.) or for the construction industry.

Figures 1-3 show a first embodiment of the invention wherein the structure 1 has a lightening layer 2 and a stiffening layer 5 which is associated with the upper main face 3 of that lightening layer. Alternatively the stiffening layer 5 can be associated with the lower main face 4 of the lightening layer 2.

The lightening layer 2 is constituted by a panel with locular structure 8 with the associated tubular cells 9 having a hexagonal transverse cross-section.

Figure 2 shows the preparation step of the structure 1 of the method according to the invention and Figure 3 shows the forming and cooling step for obtaining an article 15 having a flat shape structure.

Figures 4-6 correspond to the previous figures, but show a variation wherein the lightening layer 2 is constituted by a panel with locular structure 8 in which the tubular cells 9 have a circular transverse cross-section.

Figures 7-9 correspond to Figures 1-3, but relate to an additional variation of the invention wherein the lightening layer 2 is constituted by a porous panel 14.

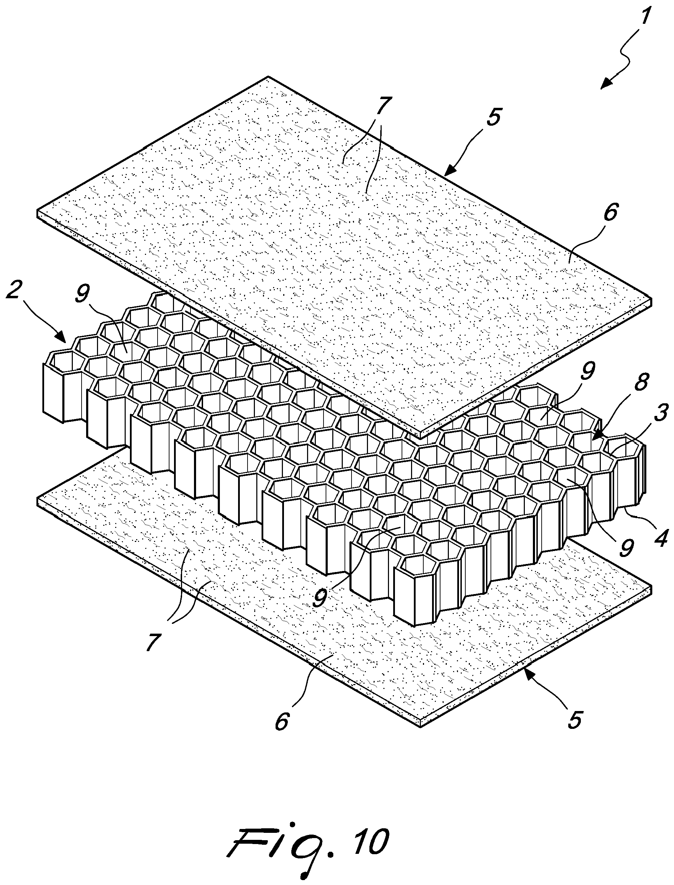

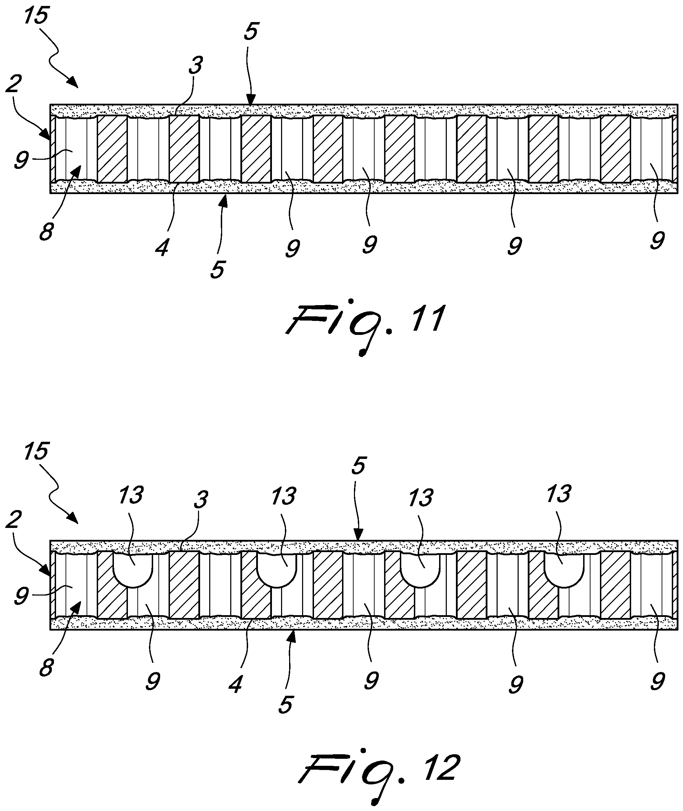

Figures 10 and 11 relate to a second embodiment of the invention wherein the structure 1 has a lightening layer 2 and a stiffening layer 5 which is associated with each one of the main faces 3 and 4 of that lightening layer.

The lightening layer 2 is constituted by a panel with locular structure 8 with the associated tubular cells 9 having a hexagonal transverse cross-section.

Alternatively the lightening layer 2 could be constituted by a panel with locular structure 8 with the associated tubular cells 9 having a circular transverse cross-section, or by a porous panel 14.

Figure 11 shows an article 15 obtainable by processing the structure 1 of Figure 10 using the method according to the invention.

Figure 12 shows a variation of the article 15 of Figure 11 wherein the lightening layer 2 is worked so as to obtain a plurality of grooves 13 on the upper main face 3 so as to define receptacles for accommodating tubes, cables or the like, not shown. Alternatively the grooves could be defined on the lower main face 4, on both the main faces 3 and 4, or through the thickness of the lightening layer 2.

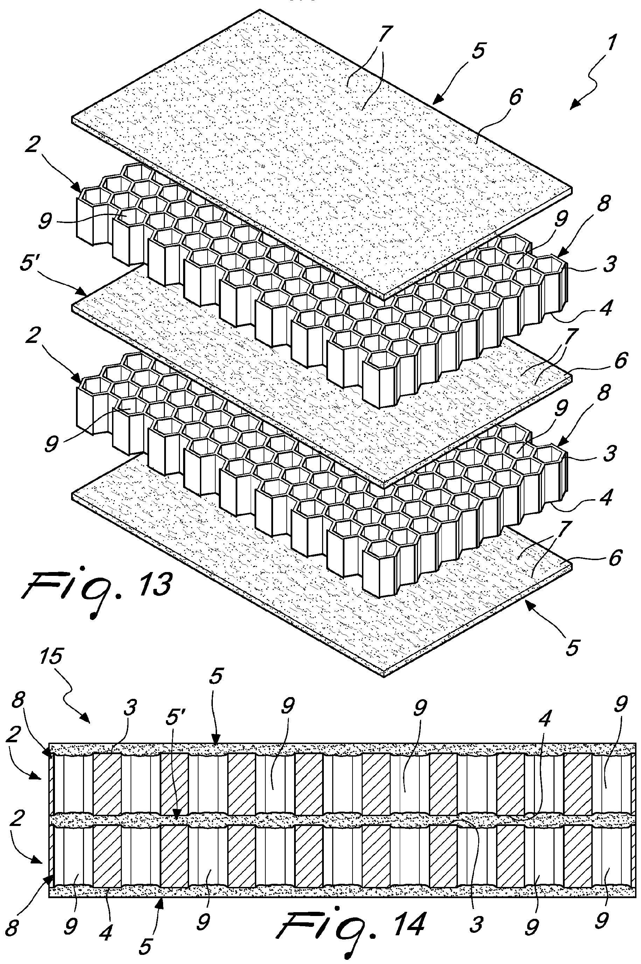

Figures 13 and 14 relate to a third embodiment of the invention wherein the structure 1 has two lightening layers 2 between which an intermediate stiffening layer 5' is interposed, and two stiffening layers 5 are arranged externally.

Alternatively each lightening layer 2 could be constituted by a corresponding panel with locular structure 8 with the associated tubular cells 9 having a circular transverse cross-section, or by a respective porous panel 14.

The two lightening layers 2 can have a different shape structure from each other.

Figure 14 shows an article 15 obtainable by processing the structure 1 of Figure 13 using the method according to the invention.

In an additional variation of the invention there can be three or more lightening layers 2 which have respective intermediate stiffening layers 5' interposed in pairs.

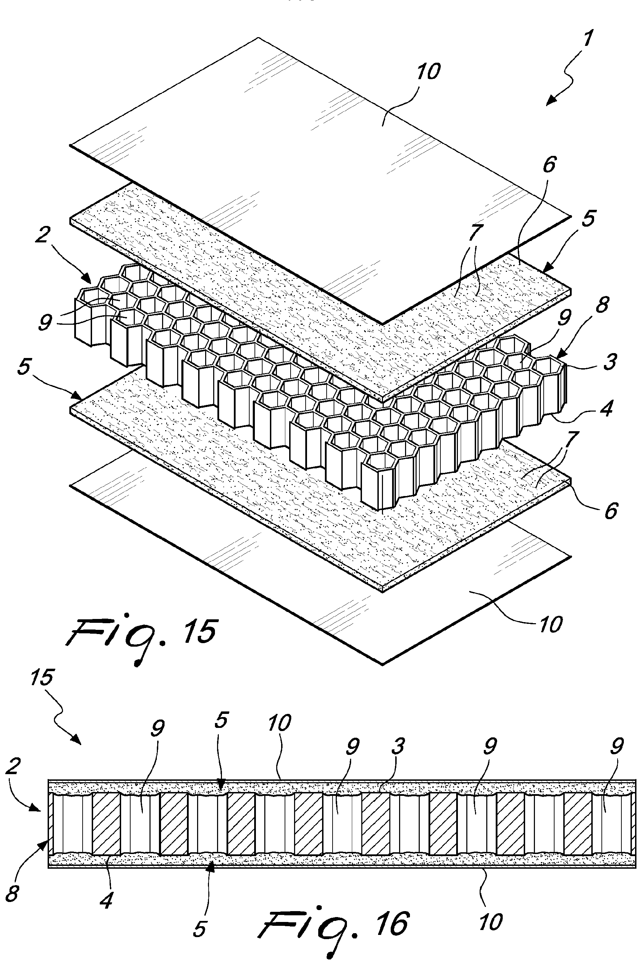

Figures 15 and 16 relate to a fourth embodiment of the invention wherein the structure 1 has a lightening layer 2 and a stiffening layer 5 which is associated with each one of the main faces 3 and 4 of that lightening layer and an additional covering layer 10 which is associated externally with each stiffening layer 5.

Each stiffening layer 2 is constituted by a respective panel with locular structure 8 with the associated tubular cells 9 having a hexagonal transverse cross-section.

Alternatively each stiffening layer 5 could be constituted by a corresponding panel with locular structure 8 with the associated tubular cells 9 having a circular transverse cross-section, or by a respective porous panel 14.

Alternatively at least one of the covering layers 10 could be substituted by a respective functional layer 11.

Figure 16 shows an article 15 obtainable by processing the structure 1 of Figure 15 using the method according to the invention.

In a variation, there could be two or more lightening layers 2 in pairs interleaved by a respective intermediate stiffening layer 5'.

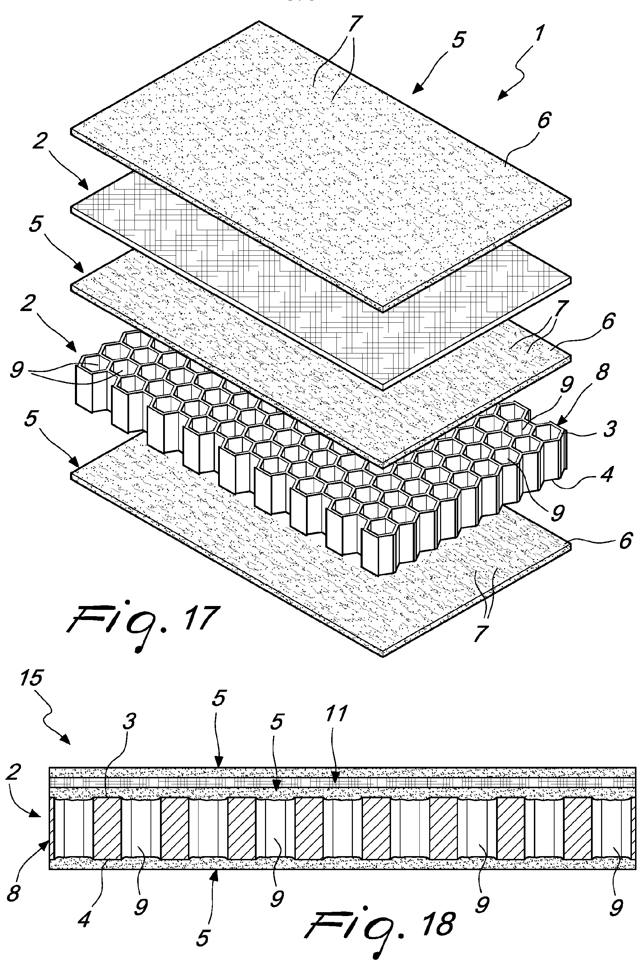

Figures 17 and 18 relate to a fifth embodiment of the invention wherein the structure 1 has a lightening layer 2 and a stiffening layer 5 which is associated with each one of the main faces 3 and 4 of that lightening layer, a functional layer 11 associated with one of the above mentioned stiffening layers 5 on the opposite side from the lightening layer 2 and an additional stiffening layer 5 to cover the functional layer 11.

The lightening layer 2 is constituted by a panel with locular structure 8 with the associated tubular cells 9 having a hexagonal transverse cross-section.

Alternatively the stiffening layer 5 could be constituted by a panel with locular structure 8 with the associated tubular cells 9 having a circular transverse cross-section, or by a porous panel 14.

In a variation, there could be two or more lightening layers 2 in pairs interleaved by a respective intermediate stiffening layer 5'.

In addition there could be at least one covering layer 10 on one of the external sides of the structure 1.

Figure 18 shows an article 15 obtainable by processing the structure 1 of Figure 17 using the method according to the invention.

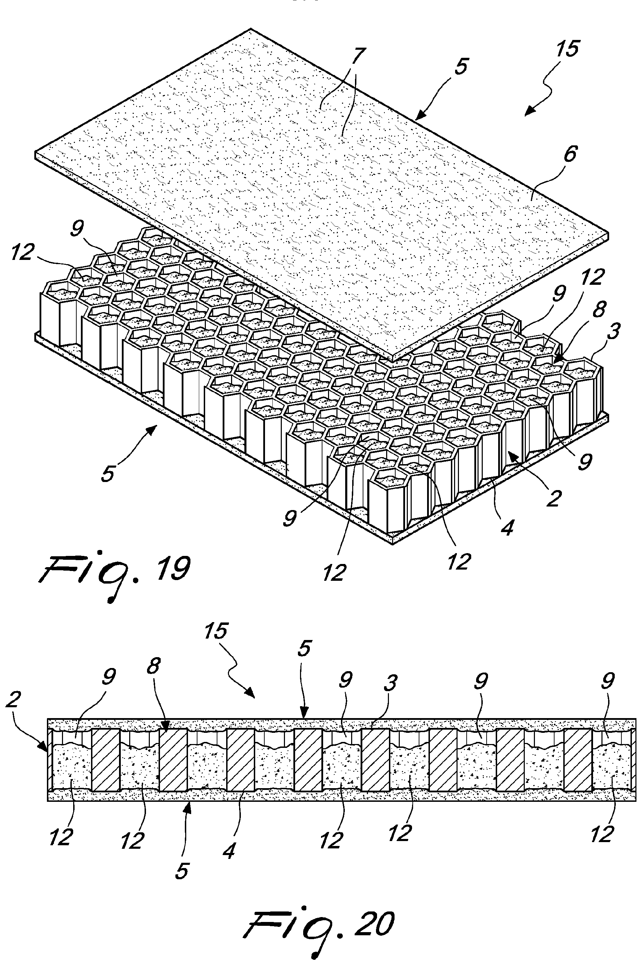

Figures 19 and 20 relate to a sixth embodiment of the invention wherein the structure 1 has a lightening layer 2 and a stiffening layer 5 which is associated with each one of the main faces 3 and 4 of that lightening layer.

The lightening layer 2 is constituted by a panel with locular structure 8 with the associated tubular cells 9 having a hexagonal transverse cross-section. Thermally insulating material 12 in powder form is accommodated inside the tubular cells 9.

Such thermally insulating material 12 is inserted into the tubular cells 9 in the preparation step of the structure 1 after having positioned the panel with locular structure 8 with the main face 3 resting on the stiffening layer 5 arranged below, and before positioning the stiffening layer 5 that is associated with the main face 3.

The tubular cells 9 are partially filled with thermally insulating material 12 in powder form.

In order to allow the deformation of the structure 1 in the forming and cooling step so as to obtain a non-flat article 15, it is preferable to keep the tubular cells 9 partially free.

Alternatively the stiffening layer 5 could be constituted by a panel with locular structure 8 with the associated tubular cells 9 having a circular transverse cross-section.

In a variation, there could be two or more lightening layers 2 in pairs interleaved by a respective intermediate stiffening layer 5'.

In addition there could be at least one covering layer 10 on one of the external sides of the structure 1 and/or one or more functional layers 11.

Figure 20 shows an article 15 obtainable by processing the structure 1 of Figure 19 using the method according to the invention.

In practice it has been found that the invention as described achieves the intended aim and objects and, in particular, attention is drawn to the fact that the invention makes it possible to obtain a structure made of multilayer material with which to provide lightened structural articles using the method described above simply and rapidly, so reducing the production times and costs thereof and favoring the use and diffusion thereof in different technological sectors.

The use of prefabricated materials makes carrying out the invention even more practical and rapid.

The manufacturing method, by virtue of the use of thermoplastic materials and not thermosetting materials, provides optimized efficiency and productivity.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

The disclosures in Italian Patent Application No. 102020000003931 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A structure (1) made of multilayer material for obtaining lightened structural articles, which comprises at least one lightening layer (2) provided with a pair of mutually opposite main faces (3, 4) and at least one stiffening layer (5) associated with at least one of said main faces (3, 4), **characterized in that** said at least one stiffening layer (5) comprises a composite material which comprises a thermoplastic polymeric matrix (6) in which reinforcement fibers (7) are dispersed.

2. The structure (1) according to claim 1, **characterized in that** said lightening layer (2) comprises at least one panel with locular structure (8) in which tubular cells (9) extend transversely with respect to the extension of the panel itself and have a transverse cross-section that is substantially polygonal or circular.

3. The structure (1) according to claim 2, **characterized in that** said panel with locular structure (8) is made of thermoplastic polymeric material, paper, cardboard or aluminum.

4. The structure (1) according to claim 1, **characterized in that** said lightening layer (2) comprises a porous panel (14) obtained from a solidified foam based on thermoplastic polymers.

5. The structure (1) according to claim 1, **characterized in that** said thermoplastic polymeric matrix (6) comprises polypropylene, compounds thereof or derivatives thereof.

6. The structure (1) according to claim 1, **characterized in that** said reinforcement fibers (7) are chosen from the group comprising glass fibers, carbon fibers, aramid fibers, plant fibers, polyimide (PI) fibers.

7. The structure (1) according to one or more of the preceding claims, **characterized in that** it comprises at least one covering layer (10) associated with said at least one stiffening layer (5) on the opposite side from said lightening layer (2).

8. The structure (1) according to one or more of the preceding claims, **characterized in that** it comprises at least one functional layer (11).

9. The structure (1) according to claim 8, **characterized in that** said functional layer (11) is interposed between two of said stiffening layers (5; 5, 5'), of which one is associated with one of the main faces (3, 4) of said lightening layer (2), or which are interposed between two of said lightening layers (2).

10. The structure (1) according to claim 8, **characterized in that** said functional layer (11) is associated with said at least one stiffening layer (5) on the opposite side from said lightening layer (2).

11. The structure (1) according to claim 8, **characterized in that** said functional layer (11) is made of sound-absorbing, fire-resistant and/or thermally insulating material.

12. The structure (1) according to claims 1 and 2, **characterized in that** it comprises thermally insulating material (12) accommodated inside said tubular cells (9).

13. A method for manufacturing a lightened structural article (15), **characterized in that** it comprises the following steps:
- preparing a structure (1) made of multilayer material according to one or more of claims 1-12,
- heating said structure (1) until the softening temperature of said thermoplastic polymeric matrix (6) is reached,
- forming and cooling said structure (1) so as to obtain a lightened structural article (15).

14. The method according to claim 13, **characterized in that** said forming and cooling step is carried out by molding or lamination.

15. A lightened structural article (15), **characterized in that** it is obtained using the method according to claims 13 or 14.

16. Use of an article (15) according to claim 15 as a structural panel of a vehicle.

17. Use of an article (15) according to claim 15 as a structural panel for the construction industry.
